# FASCICULE DE BREVET EUROPEEN

(11) **EP 3 727 840 B1**
(45) Date de publication et mention de la délivrance du brevet: **01.09.2021**
(21) Numéro de dépôt: 18811874.9
(22) Date de dépôt: 10.12.2018
(51) Int. Cl.: B32B 7/12, B32B 27/08, B32B 27/30, B32B 27/32, B32B 27/34, B32B 27/36, B65D 43/00

(54) **FILM MULTICOUCHE INCLUANT UN POLYMERE FLUORE ET SON UTILISATION POUR UN EMBALLAGE REFERMABLE**
MEHRSCHICHTFOLIE MIT EINEM FLUORPOLYMER UND DEREN VERWENDUNG FÜR WIEDERVERSCHLIESSBARE VERPACKUNG
MULTILAYER FILM INCLUDING A FLUOROPOLYMER AND USE THEREOF FOR RESEALABLE PACKAGING

(30) Priorité: 19.12.2017 FR 1762424
(43) Date de publication de la demande: 28.10.2020
(73) Titulaire: Bostik SA, 92700 Colombes (FR)
(72) Inventeur: ROBERT, Christophe, 60280 VENETTE (FR); PUCHOIS, Romain, 60280 VENETTE (FR)
(74) Mandataire: Arkema Patent
(86) Numéro de dépôt international: PCT/EP2018/084220
(87) Numéro de publication internationale: WO 2019/121119

(56) Documents cités:
- WO-A1-2009/142825
- WO-A1-2011/123410
- WO-A1-2012/062317
- WO-A1-2017/013330
- WO-A2-2011/130467

## Description

La présente invention a pour objet un film multicouche comprenant une couche constituée par une composition auto-adhésive thermofusible extrudable et une couche thermoscellable et sécable, un procédé de fabrication dudit film, ainsi que son utilisation pour la fabrication d'emballages (ou barquettes) refermables, destinés en particulier au conditionnement de denrées alimentaires, notamment périssables.

On connaît par les demandes WO 02/064694, WO 12/045950, WO 12/045951, WO 14/020243, EP2946920, EP2966140 et WO2017/013330 des films multicouches comprenant une couche constituée par une composition auto-adhésive thermofusible extrudable et une couche thermoscellable et sécable. De tels films sont destinés à une utilisation pour la fabrication d'emballages (ou barquettes) refermables.

Les emballages refermables, par exemple sous forme de barquettes ou sachets, sont utilisés dans l'industrie agroalimentaire et la grande distribution pour conditionner des denrées périssables, notamment des produits frais. De tels emballages sont également décrits par le brevet EP 1053952.

Après une première ouverture de l'emballage, et consommation d'une partie du produit alimentaire qu'il contient, le consommateur peut manuellement refermer l'emballage de façon substantiellement hermétique et assurer par conséquent, le cas échéant après mise au réfrigérateur, la conservation de la portion restante du produit. Une succession de réouvertures et de refermetures est également possible.

Ces emballages comprennent en général un contenant (ou réceptacle) et un opercule formant couvercle, qui sont fixés l'un à l'autre hermétiquement par thermosoudage (désigné également par l'expression synonyme de thermoscellage).

Le réceptacle, plus ou moins profond et relativement rigide, est souvent constitué d'une feuille multicouche (dite également complexe ou composite) ayant une épaisseur minimale de 200 µm, en général comprise entre 200 et 1000 µm. Cette feuille est thermoformée de manière à présenter un fond plan sur lequel repose le produit alimentaire et un pourtour en forme de bande plane. Ce pourtour, généralement parallèle au fond, est lié par soudure à l'opercule, souple et plan, qui est constitué d'un film multicouche (qualifié également de complexe ou composite) d'épaisseur en général comprise entre 40 et 150 µm, et qui est désigné parfois par la dénomination de film d'operculage.

Lors de l'ouverture de l'emballage, le film d'operculage est séparé manuellement du réceptacle au niveau de la bande plane du pourtour. Cette opération laisse apparaître une couche adhésive au niveau de cette bande plane, tant sur la bande d'opercule que sur la bande de réceptacle qui étaient précédemment en contact. Ces 2 couches adhésives (continues ou discontinues) « dites filles » résultent de la rupture d'une couche adhésive initiale ou « mère » ou, éventuellement, de sa séparation (ou décollement) de l'une des 2 couches du film complexe qui lui sont adjacentes. La couche adhésive initiale est donc une des couches dudit film complexe, désignée par "couche A". Ledit film complexe multicouche est lui-même un élément qui peut être compris dans la feuille composite constitutive du réceptacle, mais qui est le plus souvent, en pratique, inclus dans le film d'operculage.

Les 2 couches adhésives filles qui sont présentes, après ouverture de l'emballage, sur les bandes situées sur le pourtour respectif du réceptacle et de l'opercule sont donc en regard l'une de l'autre. Ainsi, il suffit de repositionner l'opercule sur le réceptacle, conformément à leur position dans l'emballage avant ouverture, afin de remettre en contact les 2 bandes de couches adhésives filles. Une simple pression manuelle permet alors d'obtenir la refermeture de l'emballage. La composition adhésive qui constitue les couches adhésives mère et filles est donc nécessairement un adhésif sensible à la pression (également dénommé auto-adhésif ou encore PSA, de l'anglais « Pressure Sensitive Adhesive »).

Outre la couche A constituée par la composition auto-adhésive thermofusible extrudable, les films complexes connus de l'art antérieur comprennent également une couche thermoscellable et sécable B et une couche complexable C, la couche A assurant la liaison entre B et C.

La couche complexable C peut être complexée (ou contrecollée) avec d'autres couches pour la réalisation du film multicouche, par exemple avec une couche rigide pour améliorer la tenue mécanique dudit film en vue de la réalisation de l'opercule de l'emballage.

La couche thermoscellable (terme synonyme de thermosoudable) et sécable B est par exemple constituée d'une polyoléfine, plus particulièrement de PolyEthylène (PE) en raison de sa thermoscellabilité à basse température. Lorsque la couche B est incluse dans le film d'operculage de l'emballage refermable, elle est nécessairement en contact avec l'atmosphère qui entoure l'article emballé.

La couche thermoscellable et sécable B permet d'assurer :
- lors du conditionnement du produit alimentaire, la fermeture de l'emballage par thermosoudage du film d'operculage sur le réceptacle, au niveau de la bande plane du pourtour, puis
- la première ouverture de l'emballage réalisée manuellement par le consommateur, et obtenue au moyen de la rupture de la zone sécable qui est localisée à la surface de B, au niveau de la bande plane du pourtour du réceptacle.

Le déroulement de cette première ouverture commence par la rupture de ladite zone sécable, puis se poursuit par la propagation de la rupture le long de la couche adhésive A, et ce jusqu'à la séparation entre l'opercule et le réceptacle. Cette propagation s'opère par rupture de la couche adhésive A dans sa masse (dite rupture cohésive) et/ou par rupture de l'interface de ladite couche A avec l'une et/ou l'autre des 2 couches adjacentes B ou C (dite rupture adhésive).

La facilité d'ouverture des emballages constitués par les films multicouches précédemment décrits est étroitement liée aux propriétés du PSA et plus particulièrement à la force qu'il faut appliquer, lors de l'ouverture de l'emballage (ci-après dénommée première ouverture), pour obtenir la rupture de la couche adhésive mère et/ou sa séparation d'une des 2 couches qui lui sont adjacentes dans le film composite multicouche mentionné précédemment.

La capacité de l'emballage à se refermer et la qualité de la refermeture obtenue (ci-après dénommée première refermeture) sont importantes pour disposer à nouveau d'un emballage substantiellement hermétique et donc apte à assurer la conservation de son contenu. La qualité de la première refermeture est également étroitement liée aux propriétés du PSA. Elle est évaluée par la force qu'il faut appliquer, lors de la ré-ouverture (désignée ci-après par deuxième ouverture), pour obtenir à nouveau la rupture et/ou le décollement de la couche adhésive qui a été formée par le repositionnement des 2 couches adhésives filles, suivi par la pression manuelle appliquée sur le pourtour de l'emballage.

Précisément, il apparaît à présent de plus en plus nécessaire d'améliorer les performances de refermeture des emballages refermables précédemment décrits, et de proposer, dans le cadre de l'amélioration constante desdits emballages proposés par l'industrie au consommateur, de nouvelles solutions permettant d'élargir ses possibilités de choix.

La présente invention a donc pour but de proposer un nouveau film multicouche convenant à la fabrication d'emballage refermable, qui permette - tout en maintenant une première ouverture facile de l'emballage - d'améliorer la qualité de sa refermeture (ou première refermeture), de manière à assurer au consommateur de manière plus efficace la conservation de la portion restante du produit alimentaire périssable.

L'invention a donc également pour but d'augmenter la force de deuxième ouverture, et des ouvertures suivantes, tout en maintenant la force de première ouverture à un niveau acceptable.

Un autre but de la présente invention est de proposer un film multicouche permettant de réaliser les buts précédents à la température ambiante, correspondant à la température à laquelle le consommateur procède à l'ouverture et à la refermeture de l'emballage.

Il a à présent été trouvé que ces buts peuvent être obtenus, en totalité ou en partie, au moyen du film multicouche selon l'invention qui est décrit ci-après.

La présente invention a donc pour objet, en premier lieu, un film multicouche comprenant :
- une couche adhésive A d'épaisseur allant de 7 à 50 µm et constituée par une composition auto-adhésive thermofusible extrudable a qui a un indice d'écoulement (ou MFI), mesuré pour une température de 190°C et un poids total de 2,16 kg, allant de 0,01 à 200 g/10 minutes ;
- une couche thermoscellable et sécable B constituée par une composition b ;
- une couche complexable C constituée par une composition c ;

les couches B et C étant liées entre elles par la couche A ; et ledit film étant caractérisé en ce que une des compositions b et c est une composition f à base d'un matériau thermoplastique P, ladite composition f comprenant, sur la base de son poids total, de 0,005 à 1 % en poids d'un (co)polymère fluoré thermoplastique F.

On connaît, dans le domaine général de la mise en forme de polyéthylène basse densité par procédé d'extrusion ou co-extrusion, l'utilisation de (co)polymères fluorés thermoplastiques comme agents d'aide audit procédé, dans lequel ils permettent de réduire les phénomènes indésirables de friction dans l'extrudeuse. La diminution de la friction s'accompagne d'une diminution de la pression d'extrusion, qui permet ainsi d'augmenter la cadence de la production industrielle.

Il a à présent été découvert, de manière très surprenante, que l'incorporation d'un copolymère fluoré dans l'une des couches B et C d'un film multicouche objet de l'invention, s'accompagne également d'une amélioration très significative de la qualité de la refermeture de l'emballage refermable obtenu à partir dudit film, sans détériorer de façon notable sa facilité de première ouverture.

### Composition f :

La composition f à base d'un matériau thermoplastique P comprend, sur la base de son poids total, de 0,005 à 1 % en poids d'un (co)polymère fluoré thermoplastique F.

Selon un mode de réalisation de l'invention, le polymère fluoré thermoplastique F est un homopolymère ou un copolymère de fluorure de vinylidène.

Les homopolymères de vinylidène (ou PVDF) sont largement disponibles au plan commercial.

Les comonomères qui peuvent être utilisés pour former un copolymère de fluorure de vinylidène peuvent être très variés. On peut ainsi citer : le fluorure de vinyle ; le trifluoroéthylène (VF3) ; le chlorotrifluoroethylène (CTFE) ; le 1,2-difluoroéthylène ; le tetrafluoroéthylène (TFE) ; l'hexafluoropropylène (HFP) ; les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE) ; le perfluoro (1,3-dioxole); le perfluoro(2,2-diméthyl-1,3-dioxole) (PDD).

Selon un mode davantage préféré, le (co)polymère fluoré thermoplastique F est un copolymère de fluorure de vinylidène et de l'HexaFluoroPropylène (ou HFP, également dénommé perfluoropropène). Ce dernier copolymère est aussi désigné par l'appellation PVDF-HFP.

Un tel copolymère thermoplastique comprend généralement jusqu'à 45 % en poids de HFP en tant que comonomère, sur la base du poids total de monomères. Il est également disponible au plan commercial.

Un domaine préféré de la teneur en F de la composition f est de de 0,01 à 0,5 %, et encore plus particulièrement de 0,02 à 0,2 %.

Le matériau thermoplastique P est généralement un polymère thermoplastique choisi parmi :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- un polymère d'acide lactique (PLA), ou
- un polyhydroxyalkanoate (PHA).

Parmi les polymères thermoplastiques listés ci-dessus, on préfère les polymères suivants : PE, PP, copolymère PE-PP, PA, PET, EVA, EVOH, EMA ou EBA.

On préfère encore utiliser comme matériau thermoplastique P un matériau polyoléfinique, et préférentiellement le PE, et encore plus préférentiellement un PE à basse densité (également désigné par l'appellation anglaise de Low Density PolyEthylene ou LDPE).

La quantité de matériau thermoplastique P comprise dans la composition t est généralement, sur la base du poids total de ladite composition, d'au moins 96 % en poids, de préférence au moins 99 %, pouvant aller jusqu'à 99,99 %.

Outre le (co)polymère fluoré thermoplastique F et le matériau thermoplastique P, la composition f peut, à titre optionnel, comprendre des additifs couramment utilisés dans le domaine de l'emballage flexible tels que des plastifiants, des agents de couplage, des stabilisants de la viscosité, des antioxydants, des absorbants UV, des agents antistatiques, des colorants, des pigments, des charges minérales. La quantité totale de ces additifs peut aller jusqu'à 3 % en poids, sur la base du poids total de f.

La composition f peut être préparée par simple mélange de ses constituants par extrusion à chaud. En pratique, elle peut avantageusement être préparée par dilution, dans le matériau thermoplastique P, de mélanges maîtres (ou masterbatches, en anglais) qui comprennent eux-mêmes, le (co)polymère fluoré thermoplastique F réparti de manière homogène dans le matériau thermoplastique P. De tels mélanges maîtres de T sont disponibles commercialement, notamment à base de PE, sous la forme de granulés de taille identique à celle des granulés de PE avec lesquels ils sont mélangés. La dilution correspondante s'opère commodément dans le cadre du procédé de fabrication du film multicouche comme décrit plus loin dans le présent texte.

### Couches B et C :

Les couches thermoscellable et sécable B et complexable C sont constituées respectivement des compositions b et c.

Au moins une des compositions b et c est la composition f telle que définie précédemment.

On préfère qu'une seule des compositions b et c soit la composition f.

La couche qui n'est pas constituée de la composition f est constituée d'un matériau thermoplastique choisi parmi l'un quelconque des polymères thermoplastiques de la liste donnée précédemment pour P, en étant identique ou différent dudit polymère, de préférence identique. La composition de ladite couche peut également comprendre, en tant qu'additifs couramment utilisés dans le domaine de l'emballage flexible, un ou plusieurs des additifs listés précédemment pour la composition f, dans une quantité pouvant aller également jusqu'à 3 % en poids, sur la base du poids total de f.

On préfère utiliser comme matériau thermoplastique pour la couche qui n'est pas constituée de la composition f un matériau polyoléfinique, et tout particulièrement le PE, et encore plus préférentiellement un PE à basse densité (également désigné par l'appellation anglaise de Low Density PolyEthylene ou LDPE).

Selon une variante particulièrement préférée du film multicouche selon l'invention, la composition b constitutive de la couche thermoscellable et sécable B est la composition f.

La couche complexable C peut être complexée (ou contrecollée) avec d'autres couches pour la réalisation de l'emballage, par exemple avec une couche rigide pour la réalisation de l'opercule.

### Couche A :

La couche adhésive A est constituée par une composition auto-adhésive thermofusible extrudable a qui a un indice d'écoulement (ou MFI), mesuré pour une température de 190°C et un poids total de 2,16 kg, allant de 0,01 à 200 g/10 minutes.

L'indice d'écoulement (ou Melt Flow Index MFI) est mesuré à 190°C et pour un poids total de 2,16 kg, conformément à la condition d) de la norme ISO 1133. Le MFI est la masse de composition (préalablement placée dans un cylindre vertical) qui s'écoule en 10 minutes au travers d'une filière de diamètre 2,095 mm, sous l'effet d'une pression exercée par un piston chargé ayant le poids total de 2,16 kg. En l'absence de mention contraire les valeurs de MFI indiquées dans le présent texte ont été mesurées dans ces mêmes conditions.

Les compositions auto-adhésives thermofusibles a ayant un MFI allant de 2 à 70 g/10 minutes sont plus particulièrement préférées.

Les compositions auto-adhésives thermofusibles sont également dénommée couramment HMPSA, correspondant aux initiales de la traduction anglaise « Hot Melt Pressure Sensitive Adhesive ». Ce sont des substances solides à température ambiante qui ne contiennent ni eau ni solvant. Appliquées à l'état fondu, elles se solidifient lors de leur refroidissement, formant ainsi une couche adhésive qui assure la liaison entre les 2 couches minces de matériau polymérique thermoplastique à assembler, tout en offrant à l'emballage correspondant les propriétés avantageuses d'ouverture et de refermeture.

La composition a comprend, sur la base du poids total de ladite composition a :
- de 40 à 70 % en poids d'une composition a1 de copolymères blocs styréniques comprenant au moins un bloc élastomère, ladite composition a1 étant constituée, sur la base de son poids total :
   - de 30 à 90 % en poids d'au moins un copolymère dibloc choisi dans le groupe comprenant les SI, SBI, SIB, SB, SEB, et SEP, et
   - de 10 à 70 % en poids d'au moins un copolymère tribloc choisi dans le groupe comprenant les SIS, SIBS, SBS, SEBS et SEPS ;
   la teneur en motifs styréniques totale de ladite composition a1 variant de 10 à 40 % en poids sur la base du poids total de a1 ; et
- de 30 à 60 % en poids d'une ou plusieurs résines tackifiantes a2.

Les résines tackifiantes a2 mises en œuvre ont généralement une température de ramollissement comprise entre 5 et 140 °C.

La température (ou point) de ramollissement est également désignée dans le domaine des adhésifs par les termes de « température Bille/Anneau » ou encore, par l'expression anglaise, « softening point Ring and Ball » souvent abrégée en R & B.

Cette température est déterminée conformément au test normalisé ASTM E 28 dont le principe est le suivant. Un anneau en laiton de diamètre environ 2 cm est rempli de la résine à tester, à l'état fondu. Après refroidissement à température ambiante, l'anneau et la résine solide sont placés horizontalement dans un bain de glycérine thermostaté dont la température peut varier de 5° C par minute. Une bille d'acier de diamètre environ 9,5 mm est centrée sur le disque de résine solide. La température de ramollissement est -durant la phase de montée en température du bain à raison de 5°C par minute- la température à laquelle le disque de résine solide, après son passage à l'état de fluide visqueux, flue d'une hauteur de 25,4 mm sous le poids de la bille.

### Composition a1 :

La composition a1 qui est comprise dans la composition HMPSA a constitutive de la couche adhésive A comprend un ou plusieurs copolymères blocs styréniques, de masse molaire moyenne en poids Mw généralement comprise entre 50 kDa et 500 kDa.

Ces copolymères blocs styréniques sont constitués de blocs de différents monomères polymérisés incluant au moins un bloc polystyrène, et sont préparés par des techniques de polymérisation radicalaire.

En l'absence d'indication contraire, les masses molaires moyennes en poids M_{w} qui sont données dans le présent texte sont exprimées en dalton (Da) et sont déterminées par Chromatographie par Perméation de Gel, la colonne étant calibrée avec des étalons de polystyrène.

Les copolymères tribloc incluent 2 blocs polystyrène et un bloc élastomère. Ils peuvent revêtir des structures diverses : linéaire, en étoile (également dénommée radiale), branchée ou encore en peigne. Les copolymères dibloc incluent 1 bloc polystyrène et 1 bloc élastomère.

Les copolymères tri-bloc ont pour formule générale :

ABA (I)

dans laquelle :
- A représente un bloc non élastomère styrénique (ou polystyrène), et
- B représente un bloc élastomère qui peut être :
- le polyisoprène. Le copolymère bloc a alors pour structure : polystyrène-polyisoprène-polystyrène, et pour dénomination : SIS ;
- le polyisoprène suivi d'un bloc polybutadiène. Le copolymère bloc a alors pour structure : polystyrène-polyisoprène-polybutadiène-polystyrène, et pour dénomination : SIBS
- le polybutadiène. Le copolymère bloc a alors pour structure : polystyrène- polybutadiène- polystyrène, et pour dénomination : SBS ;
- le polybutadiène hydrogéné totalement ou en partie. Le copolymère bloc a alors pour structure: polystyrène-poly(éthylènebutylène)- polystyrène et pour dénomination : SEBS ;
- le polyisoprène hydrogéné totalement ou en partie. Le copolymère bloc a alors pour structure : polystyrène-poly(éthylènepropylène)- polystyrène et pour dénomination : SEPS.

Les copolymères di-bloc ont pour formule générale :

A-B (II)

dans laquelle A et B sont tels que définis précédemment.

Lorsque la composition a1 comprend plusieurs copolymères styréniques triblocs, ces derniers étant choisis dans le groupe comprenant les SIS, les SBS, les SEPS, les SIBS, les SEBS, il est bien entendu que lesdits triblocs peuvent appartenir à une seule ou à plusieurs de ces 5 familles de copolymères. Il en est de même, *mutatis mutandis,* pour les copolymères diblocs.

On préfère utiliser une composition a1 comprenant un copolymère tribloc et un copolymère dibloc ayant le même bloc élastomère, en raison notamment du fait que de tels mélanges sont disponibles commercialement.

Selon une variante de réalisation particulièrement préférée, la teneur en copolymère dibloc dans la composition a1 peut varier de 40 à 90 %, de préférence de 50 à 90 %, encore plus préférentiellement de 70 à 90 %.

Selon un mode de réalisation particulièrement avantageux de la composition a constitutive de la couche A comprise dans le film multicouche selon l'invention, la composition a1 est constituée d'un copolymère tribloc SIS et d'un copolymère dibloc SI. Dans ce cas la teneur en motifs styréniques totale de la composition a1) varie de préférence de 10 à 20%.

Les copolymères triblocs compris dans la composition a1 ont de préférence une structure linéaire.

Les copolymères blocs styréniques à bloc élastomère, notamment de type SI et SIS, utilisables dans la composition a) sont disponibles commercialement, souvent sous la forme de mélanges tribloc/dibloc.

Le Kraton® D1113BT de la société Kraton et le Quintac® 3520 de la société Zeon Chemicals sont des exemples de compositions a1 constituées de SIS et SI.

Le Kraton® D1113BT est une composition dont la teneur en motifs styréniques globale est de 16 %, et qui est constituée de 45 % de copolymère tribloc SIS linéaire de M_{w} environ 250 kDa, et de 55 % de copolymère dibloc SI de M_{w} environ 100 kDa. Le Quintac® 3520 est une composition qui est constituée, respectivement, de 22 % et de 78 % de tribloc SIS linéaire (M_{w} environ 300 kDa) et de dibloc SI (M_{w} environ 130 kDa), et dont la teneur totale en motifs styréniques est de 15 %.

### Résines tackifiantes a2 :

La composition HMPSA a constitutive de la couche A comprend également une ou plusieurs résines tackifiantes a2 ayant, généralement, une température de ramollissement comprise entre 5 et 140 °C.

La ou les résines tackifiantes a2 utilisables ont des masses molaires moyennes en poids M_{w} généralement comprises entre 300 et 5000 Da et sont choisies notamment parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

Selon une variante préférée, on utilise des résines aliphatiques appartenant aux catégories (ii) ou (iii) pour lesquelles on peut citer comme exemples de résine disponible commercialement :
(ii) l'Escorez® 1310 LC disponible auprès de Exxon Chemicals qui est une résine obtenue par polymérisation d'un mélange d'hydrocarbures aliphatiques insaturés ayant environ 5 atomes de carbone, et qui possède une température de ramolissement de 94°C et un Mw d'environ 1800 Da ; l'Escorez® 5400 également de la société Exxon Chemicals qui est une résine obtenue par polymérisation, puis hydrogénation d'un mélange d'hydrocarbures aliphatiques insaturés ayant environ 9 ou 10 atomes de carbone et qui possède une température de ramolissement de 100°C et un Mw d'environ 570 Da ; la Regalite™ R1125, disponible auprès de la société Eastman, qui est une résine totalement hydrogénée ayant une température de ramollissement de 125°C, une masse molaire moyenne en poids M_{w} de 1200 Da, et qui est obtenue par polymérisation d'une composition d'hydrocarbures insaturés ayant 9 atomes de carbone ;
(iii) la Dercolyte® S115 disponible auprès de la société « Dérivés Résiniques et Terpéniques ou DRT) qui une résine terpène ayant une température de ramollissement de 115°C et un Mw d'environ 2300 Da.

Selon une variante préférée, la composition HMPSA a constitutive de la couche A est constituée essentiellement :
- de 40 à 70 % de la composition a1 de copolymères blocs styréniques ; et
- de 30 à 60 % d'au moins une résine tackifiante a2 ayant une température de ramollissement comprise entre 5 et 140 °C.

Selon une autre variante préférée, la composition HMPSA a constitutive de la couche A comprend ou est constituée essentiellement :
- de 50 à 70 % de la composition a1 de copolymères blocs styréniques ; et
- de 30 à 50 % d'au moins une résine tackifiante a2 ayant une température de ramollissement comprise entre 5 et 140 °C.

Selon encore une autre variante préférée, la composition HMPSA a constitutive de la couche A peut également comprendre, outre la composition a1 et la (ou les) résines tackifiantes a2, de 0,1 à 2 % d'un ou plusieurs stabilisants (ou anti-oxydant). Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox® 1010 de CIBA. Les anti-oxydants primaires peuvent être utilisés seuls ou en combinaison avec d'autres anti-oxydants tels que des phosphites comme l'Irgafos® 168 également de CIBA, ou encore avec des stabilisants UV tels que des amines.

La composition a peut également comprendre un plastifiant, mais dans une quantité ne dépassant pas 5 %. On peut utiliser comme plastifiant une huile paraffinique et naphténique (comme le Primol® 352 de la société ESSO) comprenant éventuellement des composés aromatiques (comme le Nyflex 222B).

La composition a peut enfin comprendre des charges minérales ou organiques, des pigments ou des colorants.

La composition adhésive a peut être préparée, sous la forme de granulés de taille comprise entre 1 et 10 mm, de préférence entre 2 et 5 mm, par simple mélange de ses ingrédients à chaud, entre 150 et 200°C, de préférence à environ 160°C, au moyen d'une extrudeuse à 2 vis munie d'un outil de découpe du produit extrudé en sortie de la filière.

Outre les couches A, B et C, le film multicouche selon l'invention peut comprendre également d'autres couches nécessaires à la réalisation de l'emballage, comme par exemple :
- une couche intermédiaire (également qualifiée de liaison) D, reliant la couche A à la couche B, et/ou une couche de liaison E, reliant la couche A à la couche C, ou
- une couche rigide nécessaire à la tenue mécanique du réceptacle, ou
- une couche imprimable, ou encore
- une couche à effet barrière contre l'oxygène, la vapeur d'eau ou bien le monoxyde de carbone.

Les couches de liaison D et E sont constituées de compositions identiques ou différentes de polymères. Lesdits polymères sont généralement choisis parmi des homopolymères ou copolymères de polyéthylène, des homopolymères ou copolymères de polypropylène, des copolymères d'éthylène et comonomères polaires, ou encore des copolymères de polyoléfines greffés. Il est fait référence pour plus de détails sur la composition des couches de liaison au document US2013/0029553.

Les matériaux utilisables pour constituer les autres couches optionnelles peuvent être identiques ou différents et comprennent en général des polymères thermoplastiques qui peuvent être choisis parmi les polymères cités précédemment pour la couche B ou la couche C.

L'épaisseur de la couche A peut varier, de préférence, de 8 à 25 µm, encore plus préférentiellement de 10 à 20 µm.

L'épaisseur des couches de liaison D et E est quant à elle généralement comprise entre 1 et 10 µm, de préférence entre 2 et 8 µm.

L'épaisseur des 2 couches B et C, ainsi que des autres couches éventuellement mises en œuvre dans le film multicouche selon l'invention est susceptible de varier dans un large domaine allant de 5 à 150 µm.

Selon une variante de réalisation, le film multicouche selon l'invention est un film à 5 couches constitué par la couche adhésive A, les 2 couches intermédiaires D et E et les 2 couches externes B et C, selon l'enchaînement B/D/A/E/C dans lequel le signe «/» signifie que les faces des couches concernées sont en contact direct.

Selon une autre variante de réalisation, le film multicouche selon l'invention est un film à 3 couches constitué par la couche adhésive A et les 2 couches externes B et C, selon l'enchaînement B/A/C.

La présente invention concerne également un procédé de fabrication du film multicouche tel que défini précédemment, caractérisé en ce qu'il comprend la co-extrusion de la composition auto-adhésive thermofusible a et des compositions b et c, à une température comprise entre 150°C et 260°C.

Selon une variante dudit procédé, la co-extrusion est réalisée par la mise en œuvre d'une filière rectangulaire.

Selon une variante préférée, la co-extrusion est réalisée par un procédé de soufflage de gaine (dit encore soufflage de bulle), ledit procédé comprenant :
(i) l'introduction, dans des extrudeuses séparées, des compositions et matériaux constitutifs des couches A, B, C, et le cas échéant D et E, sous la forme de granulés de taille comprise entre 1 et 10 mm, de préférence entre 2 et 5 mm, puis
(ii) la transformation par chauffage desdits granulés à l'état de liquide visqueux, puis
(iii) le passage des flux correspondants à travers une tête d'extrusion comprenant un ensemble de filières annulaires coplanaires et concentriques portées chacune à une température inférieure à 260°C, de manière à former une bulle tubulaire à plusieurs couches, dont l'ordre des couches correspond à celui désiré pour le film final, puis
(iv) l'expansion radiale (relativement au plan des filières annulaires) et l'étirement (dans le sens perpendiculaire audit plan) de la bulle, puis
(v) le refroidissement de ladite bulle.

A l'étape (i), l'introduction dans chaque extrudeuse d'une composition (ou matériau) constitutive d'une des couches du film est avantageusement réalisée au moyen d'une trémie principale. Lorsque la composition correspondante est la composition f, l'introduction du matériau thermoplastique P et de la petite quantité de mélange maître du (co)polymère fluoré thermoplastique F est mise en œuvre au moyen de trémies secondaires. Les quantités nécessaires sont ajustées au moyen de doseurs gravimétriques. Ainsi, la composition f constitutive d'une des couches B ou C est fabriquée de manière homogène.

Les caractéristiques géométriques des filières, de même que les paramètres du procédé tels que le taux d'expansion radiale et la vitesse d'étirement sont fixés de manière à obtenir l'épaisseur désirée pour les différentes couches constitutives du film multicouche. Il est notamment fait référence pour plus ample description du procédé de co-extrusion par soufflage de bulle à la demande de brevet US2013/0029553.

Selon une variante préférée du procédé selon l'invention, la tête d'extrusion mise en œuvre à l'étape (iii) est une tête d'extrusion monobloc, dans laquelle les filières annulaires sont portées à une seule et même température inférieure à 260°C. De façon avantageuse, de telles têtes d'extrusion équipent la grande majorité des dispositifs de co-extrusion par soufflage de gaine disponibles sur le marché, rendant ainsi le procédé plus facile à mettre en œuvre.

De préférence la température de co-extrusion varie dans un intervalle allant de 170 à 200 °C.

La présente invention concerne encore l'utilisation du film multicouche tel que décrit précédemment pour la fabrication d'emballages refermables.

L'utilisation pour la fabrication de barquettes refermables est particulièrement avantageuse, et selon un mode de réalisation particulièrement préféré pour la fabrication du film d'operculage de ces barquettes.

Les exemples suivants sont donnés à titre purement illustratif de l'invention, et ne sauraient en aucun cas être interprétés pour en limiter la portée.

### Exemple A (référence) : composition auto-adhésive thermofusible extrudable

On prépare, sous la forme d'un liquide visqueux, une composition constituée, sur la base de % poids/poids, de 59,8 % de Quintac® 3520, 39,7 % Regalite™ R1125 et 0,5 % d'Irganox® 1010 par simple mélange des ingrédients à 160°C au moyen d'une extrudeuse à 2 vis munie d'un outil de découpe du produit extrudé en sortie de la filière, sous la forme de granulés.

On mesure un MFI de 30 g/10 minutes.

### Exemple B (comparatif) : film tricouche BAC comprenant une couche A constituée de la composition de l'exemple A et une couche thermoscellable et sécable B constituée de LDPE :

Ce film tricouche est fabriqué au moyen d'un dispositif pilote de co-extrusion par soufflage de bulle fonctionnant en continu muni d'une tête d'extrusion monobloc portée à une température de 190°C dans lequel 3 extrudeuses sont alimentées :
- pour l'une, par la composition de l'exemple A, et
- pour les 2 autres, par du PolyEthylène basse densité (ou LDPE) ; les 3 compositions étant sous la forme de granulés de taille d'environ 4 mm.

Les paramètres du procédé sont ajustés de manière à fabriquer un film tricouche constitué :
- en tant que couche A, d'une couche d'épaisseur 15 µm constituée de la composition auto-adhésive thermofusible extrudable de l'exemple A,
- en tant que couche thermoscellable et sécable B, d'une couche d'épaisseur 15 µm constituée de LDPE ;
- en tant que couche complexable C, d'une couche d'épaisseur 30 µm constituée également de LDPE.

Parmi les paramètres usuellement fixés, on peut citer un taux d'expansion radiale de la bulle égal à 3, une vitesse d'étirement de 7 m/minute et un débit global de 11 kg/heure.

Le film tricouche ainsi obtenu a une épaisseur totale de 60 µm, une longueur de 50 m et est conditionné sous la forme d'une bobine de 250 mm de laize.

Il est soumis aux tests B.1. et B.2. décrits ci-après.

### B.1. Mesure de la force de première ouverture par pelage en T à 23°C :

On découpe dans le film tricouche ainsi obtenu un échantillon sous la forme d'une feuille rectangulaire au format A4 (21 x 29,7 cm).

La face externe de la couche complexable C de cet échantillon est :
- dans un premier temps soumise à un traitement de surface Corona (au moyen d'un plasma), puis
- dans un second temps complexée (autrement dit contrecollée ou laminée) sur un film PET d'épaisseur 23 µm au moyen d'un adhésif solvanté à base de polyuréthane et à l'aide d'un appareil d'enduction du type barre de Mayer.

La feuille rectangulaire est alors placée sous presse pendant 24h.

Puis, ladite feuille rectangulaire est repliée selon une ligne située en son milieu et parallèle au petit côté du rectangle, conduisant à la mise en contact avec elle-même de la couche scellable et sécable B.

On procède alors à un scellage partiel, au moyen de deux mâchoires chauffantes à 130°C, appliquées sous une pression de 6 bar pendant 1 seconde, de manière à obtenir des zones scellées de forme rectangulaire (8 cm de longueur et 1 cm de largeur) disposées perpendiculairement à la ligne de pliure. Chaque zone scellée est découpée pour obtenir une éprouvette de traction dans laquelle la zone scellée de 8 cm de longueur est prolongée (à celle de ses extrémités qui est opposée à la ligne de pliure) par 2 bandes d'environ 2 cm de longueur laissées libres et non scellées.

Ces deux bandes libres sont fixées sur deux dispositifs d'attache (appelés mors) reliés, respectivement, à une partie fixe et une partie mobile d'un appareil de traction qui sont situées sur un axe vertical. Cet appareil de traction est un dynamomètre.

Alors qu'un mécanisme d'entraînement communique à la partie mobile une vitesse uniforme de 300 mm/minute conduisant au pelage des 2 couches scellées, les extrémités se déplacent progressivement selon un axe vertical en formant un angle de 180°. Un capteur de force relié à ladite partie mobile mesure la force supportée par l'éprouvette ainsi maintenue. La mesure est réalisée dans une salle climatique maintenue à une température de 23°C.

La force obtenue est de 5,7 N/cm.

### B.2. Mesure de la force de deuxième ouverture par pelage en T à 23°C :

Les 2 parties de l'éprouvette précédente sont, après pelage, repositionnées en regard l'une de l'autre et mises en contact manuellement. Elles sont alors soumises à une pression exercée au moyen d'un rouleau de masse 2 kg avec lequel on procède à un mouvement d'aller-retour selon une direction parallèle à la longueur de l'éprouvette.

On obtient ainsi une éprouvette de traction de forme identique à celle préparée pour le test de pelage précédent qui est alors répété.

La force obtenue est de 1,8 N/cm.

### Exemple 1 (selon l'invention) : film tricouche BAC comprenant une couche A constituée de la composition de l'exemple A et une couche thermoscellable et sécable B constituée de 99,975 % de LDPE et de 0,025 % d'un copolymère PVDF-HFP :

On répète l'exemple B en remplaçant, pour la couche thermoscellable et sécable B, le LDPE en tant que constituant exclusif de la couche par une composition b constituée de 99,975 % de LDPE et de 0,025 % d'un copolymère PVDF-HFP dont la teneur en fluorure de vinylidène et en HFP est respectivement d'environ 60 % et 40 % en mole.

Cette dernière composition est obtenue en mélangeant des granulés de LDPE de taille environ 4 mm avec 0,5% en poids de granulés de même taille d'un prémélange de 95 % de LDPE et de 5 % dudit copolymère PVDF-HFP.

Un tel prémélange est disponible commercialement, comme agent d'aide à l'extrusion, sous l'appellation de POLYBATCH® AMF 705 auprès de la société A. Schulman.

On obtient les forces de 1^{ère} et 2^{ème} ouverture indiquées dans le tableau ci-dessous.

### Exemple 2-3 : (selon l'invention) :

On répète l'exemple 1 en modifiant la quantité du prémélange de manière à obtenir, pour la teneur en copolymère PVDF-HFP dans la composition b de la couche thermoscellable et sécable B, la valeur indiquée dans le tableau.

Les forces de 1^{ère} et 2^{ème} ouverture sont également indiquées dans le tableau.

On constate que la force de 2^{ème} ouverture du film des exemples 1 à 3 est supérieure de plus d'un facteur deux à la force de 2^{ème} ouverture du film de l'exemple comparatif B, ce qui démontre une amélioration très significative de la capacité de fermeture du film selon l'invention. Cette amélioration de la capacité de fermeture du film est obtenue avec une force de 1^{ère} ouverture, qui n'augmente pas de façon notable, et est caractéristique d'une ouverture facile de l'emballage refermable correspondant.

**Tableau**

| Exemple | Teneur en copolymère PVDF-HFP de la composition b à base de LDPE de la couche B (en % poids/poids) | Force de 1^{ère} ouverture (en N/cm) | Force de 2^{ème} ouverture (en N/cm) |
|---|---|---|---|
| B (comparatif) | 0% | 5,7 | 1,8 |
| 1 | 0,025 % | 6,6 | 4,2 |
| 2 | 0,05 % | 6,4 | 4,0 |
| 3 | 0,15 % | 7,5 | 4,2 |

## Revendications

1. Film multicouche comprenant :
- une couche adhésive A d'épaisseur allant de 7 à 50 µm et constituée par une composition auto-adhésive thermofusible extrudable a qui a un indice d'écoulement (ou MFI), mesuré pour une température de 190°C et un poids total de 2,16 kg, allant de 0,01 à 200 g/10 minutes ;
- une couche thermoscellable et sécable B constituée par une composition b ;
- une couche complexable C constituée par une composition c ;
les couches B et C étant liées entre elles par la couche A ; et
ledit film étant **caractérisé en ce que** une des compositions b et c est une composition f à base d'un matériau thermoplastique P, ladite composition f comprenant, sur la base de son poids total, de 0,005 à 1 % en poids d'un (co)polymère fluoré thermoplastique F.

2. Film multicouche selon la revendication 1, **caractérisé en ce que** le (co)polymère fluoré thermoplastique F est un homopolymère ou un copolymère de fluorure de vinylidène.

3. Film multicouche selon l'une des revendications 1 ou 2, **caractérisé en ce que** le (co)polymère fluoré thermoplastique F est un copolymère de fluorure de vinylidène et de HexaFluoroPropylène.

4. Film multicouche selon l'une des revendications 1 à 3, **caractérisé en ce que** le matériau thermoplastique P est un matériau polyoléfinique qui est compris dans la composition t à raison d'une quantité d'au moins 96 % en poids, sur la base du poids total de ladite composition.

5. Film multicouche selon l'une des revendications 1 à 4, **caractérisé en ce que** la composition b constitutive de la couche thermoscellable et sécable B est la composition f.

6. Film multicouche selon l'une des revendications 1 à 5, **caractérisé en ce que** la composition a de la couche adhésive A comprend, sur la base du poids total de ladite composition a :
- de 40 à 70 % en poids d'une composition a1 de copolymères blocs styréniques comprenant au moins un bloc élastomère, ladite composition a1 étant constituée, sur la base de son poids total :
- de 30 à 90 % en poids d'au moins un copolymère dibloc choisi dans le groupe comprenant les SI, SBI, SIB, SB, SEB, et SEP, et
- de 10 à 70 % en poids d'au moins un copolymère tribloc choisi dans le groupe comprenant les SIS, SIBS, SBS, SEBS et SEPS ;
la teneur en motifs styréniques totale de ladite composition a1 variant de 10 à 40 % en poids sur la base du poids total de a1 ; et
- de 30 à 60 % en poids d'une ou plusieurs résines tackifiantes a2.

7. Film multicouche selon l'une des revendications 1 à 6, **caractérisé en ce que** la couche adhésive A a une épaisseur allant de 8 à 25 µm.

8. Film multicouche selon l'une des revendications 1 à 7, **caractérisé en ce qu'**il comprend également une couche de liaison D, reliant la couche A à la couche B, et/ou une couche de liaison E, reliant la couche A à la couche C.

9. Procédé de fabrication du film multicouche tel que défini dans l'une des revendications 1 à 8, **caractérisé en ce qu'**il comprend la co-extrusion de la composition auto-adhésive thermofusible a et des compositions b et c, à une température comprise entre 150°C et 260°C.

10. Procédé de fabrication du film multicouche selon la revendication 9, **caractérisé en ce que** la co-extrusion est réalisée par un procédé de soufflage de gaine, ledit procédé comprenant :
(i) l'introduction, dans des extrudeuses séparées, des compositions et matériaux constitutifs des couches A, B, C, et le cas échéant D et E, sous la forme de granulés de taille comprise entre 1 et 10 mm, de préférence entre 2 et 5 mm, puis
(ii) la transformation par chauffage desdits granulés à l'état de liquide visqueux, puis
(iii) le passage des flux correspondants à travers une tête d'extrusion comprenant un ensemble de filières annulaires coplanaires et concentriques portées chacune à une température inférieure à 260°C, de manière à former une bulle tubulaire à plusieurs couches, dont l'ordre des couches correspond à celui désiré pour le film final, puis
(iv) l'expansion radiale (relativement au plan des filières annulaires) et l'étirement (dans le sens perpendiculaire audit plan) de la bulle, puis
(v) le refroidissement de ladite bulle.

11. Utilisation du film multicouche tel que défini dans l'une des revendications 1 à 8 pour la fabrication d'emballages refermables.

## Patentansprüche

1. Mehrschichtige Folie, umfassend:
- eine Haftschicht A, deren Dicke im Bereich von 7 bis 50 µm liegt und die aus einer extrusionsfähigen heißschmelzbaren Selbstklebezusammensetzung a besteht, welche einen Schmelzflussindex (MFI) hat, der im Bereich von 0,01 bis 200 g / 10 Minuten liegt, wenn er bei einer Temperatur von 190 °C und einem Gesamtgewicht von 2,16 kg gemessen wird;
- eine heißsiegelfähige und durchtrennbare Schicht B, die aus einer Zusammensetzung b besteht;
- eine komplexierbare Schicht C, die aus einer Zusammensetzung c besteht;
wobei die Schichten B und C durch die Schicht A miteinander verbunden sind; und
wobei die Folie **dadurch gekennzeichnet ist, dass** es sich bei einer der Zusammensetzungen b und c um eine Zusammensetzung f auf Grundlage eines thermoplastischen Materials P handelt, wobei die Zusammensetzung f, unter Bezugnahme auf ihr Gesamtgewicht, 0,005 bis 1 Gewichts-% eines thermoplastischen fluorierten (Co)polymers F umfasst.

2. Mehrschichtige Folie nach Anspruch 1, **dadurch gekennzeichnet, dass** es sich bei dem thermoplastischen fluorierten (Co)polymer F um ein Homopolymer oder ein Copolymer von Vinylidenfluorid handelt.

3. Mehrschichtige Folie nach einem der Ansprüche 1 oder 2, **dadurch gekennzeichnet, dass** es sich bei dem thermoplastischen fluorierten (Co)polymer F um ein Copolymer von Vinylidenfluorid und HexaFluorPropylen handelt.

4. Mehrschichtige Folie nach einem der Ansprüche 1 bis 3, **dadurch gekennzeichnet, dass** es sich bei dem thermoplastischen Material P um ein polyolefinartiges Material handelt, welches in der Zusammensetzung t in einer Menge von mindestens 96 Gewichts-% enthalten ist, unter Bezugnahme auf das Gesamtgewicht der Zusammensetzung.

5. Mehrschichtige Folie nach einem der Ansprüche 1 bis 4, **dadurch gekennzeichnet, dass** es sich bei der Zusammensetzung b, aus welcher die heißsiegelfähige und durchtrennbare Schicht B besteht, um die Zusammensetzung f handelt.

6. Mehrschichtige Folie nach einem der Ansprüche 1 bis 5, **dadurch gekennzeichnet, dass** die Zusammensetzung a der Haftschicht A Folgendes umfasst, unter Bezugnahme auf das Gesamtgewicht der Zusammensetzung a:
- 40 bis 70 Gewichts-% einer Zusammensetzung a1 aus Styrolblockcopolymeren, die mindestens ein Blockelastomer umfassen, wobei die Zusammensetzung a1 aus Folgendem besteht, unter Bezugnahme auf deren Gesamtgewicht:
- 30 bis 90 Gewichts-% mindestens eines Diblockcopolymers, das aus der Gruppe ausgewählt ist, welche die SI, SBI, SIB, SB, SEB und SEP umfasst, und
- 10 bis 70 Gewichts-% mindestens eines Triblockcopolymers, das aus der Gruppe ausgewählt ist, welche die SIS, SIBS, SBS, SEBS und SEPS umfasst;
wobei der Gesamtgehalt an Styrolbausteinen der Zusammensetzung a1 im Bereich von 10 bis 40 Gewichts-% liegt, unter Bezugnahme auf das Gesamtgewicht von a1; und
- 30 bis 60 Gewichts-% eines oder mehrerer Klebrigmacherharze a2.

7. Mehrschichtige Folie nach einem der Ansprüche 1 bis 6, **dadurch gekennzeichnet, dass** die Haftschicht A eine Dicke im Bereich von 8 bis 25 µm hat.

8. Mehrschichtige Folie nach einem der Ansprüche 1 bis 7, **dadurch gekennzeichnet, dass** sie weiterhin eine Verbindungsschicht D, welche die Schicht A mit der Schicht B verbindet, und/oder eine Verbindungsschicht E umfasst, welche die Schicht A mit der Schicht C verbindet.

9. Verfahren zur Herstellung der mehrschichtigen Folie gemäß der Begriffsbestimmung in einem der Ansprüche 1 bis 8, **dadurch gekennzeichnet, dass** es die Co-Extrusion der heißschmelzbaren Selbstklebezusammensetzung a und der Zusammensetzungen b und c bei einer Temperatur umfasst, welche im Bereich von 150 °C und 260 °C liegt.

10. Verfahren zur Herstellung der mehrschichtigen Folie nach Anspruch 9, **dadurch gekennzeichnet, dass** die Co-Extrusion mittels eines Schlauchblasverfahrens durchgeführt wird, wobei das Verfahren Folgendes umfasst:
(i) Einleiten, in getrennte Extruder, der Zusammensetzungen und Materialien, aus welchen die Schichten A, B, C sowie gegebenenfalls D und E bestehen, in Form von Granulatkörnern mit einer Größe im Bereich von 1 bis 10 mm, vorzugsweise von 2 bis 5 mm, und anschließend
(ii) Umwandeln der Granulatkörner in den zähflüssigen Zustand durch Erhitzen, und anschließend
(iii) Leiten der entsprechenden Stoffströme durch einen Extrusionskopf, welcher eine Gesamtheit an ringförmigen Düsen umfasst, die in derselben Ebene liegen und konzentrisch sind, wobei jede davon auf eine Temperatur von weniger als 260 °C gebracht wird, sodass eine röhrenförmige Blase mit mehreren Schichten gebildet wird, wobei die Reihenfolge dieser Schichten derjenigen entspricht, wie sie für die fertige Folie angestrebt wird, und anschließend
(iv) radiales Dehnen (bezogen auf die Ebene der ringförmigen Düsen) und Strecken (in Querrichtung zu dieser Ebene) der Blase, und anschließend
(v) Abkühlen der Blase.

11. Verwendung der mehrschichtigen Folie gemäß der Begriffsbestimmung in einem der Ansprüche 1 bis 8 zur Herstellung wiederverschließbarer Verpackungen.

## Claims

1. Multilayer film comprising:
- an adhesive layer A having a thickness ranging from 7 to 50 µm and consisting of an extrudable hot-melt pressure-sensitive adhesive composition a which has a melt flow index (or MFI), measured for a temperature of 190°C and a total weight of 2.16 kg, ranging from 0.01 to 200 g/10 minutes;
- a heat-sealable and splittable layer B consisting of a composition b;
- a complexable layer C consisting of a composition c;
the layers B and C being linked to one another by the layer A; and
said film being **characterized in that** one of the compositions b and c is a composition f based on a thermoplastic material P, said composition f comprising, on the basis of its total weight, from 0.005 to 1% by weight of a thermoplastic fluorinated (co)polymer F.

2. Multilayer film according to Claim 1, **characterized in that** the thermoplastic fluorinated (co)polymer F is a homopolymer or a copolymer of vinylidene fluoride.

3. Multilayer film according to either of Claims 1 and 2, **characterized in that** the thermoplastic fluorinated (co)polymer F is a copolymer of vinylidene fluoride and hexafluoropropylene.

4. Multilayer film according to one of Claims 1 to 3, **characterized in that** the thermoplastic material P is a polyolefinic material which is included in the composition t in a proportion of an amount of at least 96% by weight, on the basis of the total weight of said composition.

5. Multilayer film according to one of Claims 1 to 4, **characterized in that** the constituent composition b of the heat-sealable and splittable layer B is the composition f.

6. Multilayer film according to one of Claims 1 to 5, **characterized in that** the composition a of the adhesive layer A comprises, on the basis of the total weight of said composition a:
- from 40% to 70% by weight of a composition a1 of styrene block copolymers comprising at least one elastomer block, said composition a1 consisting, on the basis of its total weight:
- of 30% to 90% by weight of at least one diblock copolymer chosen from the group comprising SI, SBI, SIB, SB, SEB and SEP, and
- of 10% to 70% by weight of at least one triblock copolymer chosen from the group comprising SIS, SIBS, SBS, SEBS and SEPS;
the total content of styrene units of said composition a1 ranging from 10% to 40% by weight on the basis of the total weight of a1; and
- from 30% to 60% by weight of one or more tackifying resins a2.

7. Multilayer film according to one of Claims 1 to 6, **characterized in that** the adhesive layer A has a thickness ranging from 8 to 25 µm.

8. Multilayer film according to one of Claims 1 to 7, **characterized in that** it also comprises a tie layer D, connecting the layer A to the layer B, and/or a tie layer E, connecting the layer A to the layer C.

9. Process for producing the multilayer film as defined in one of Claims 1 to 8, **characterized in that** it comprises the co-extrusion of the hot-melt pressure-sensitive adhesive composition a and of the compositions b and c, at a temperature of between 150°C and 260°C.

10. Process for producing the multilayer film according to Claim 9, **characterized in that** the co-extrusion is carried out by means of a blow-moulding process, said process comprising:
(i) the introduction, into separate extruders, of the constituent compositions and materials of the layers A, B, C, and where appropriate D and E, in the form of granules having a size of between 1 and 10 mm, preferably between 2 and 5 mm, then
(ii) the conversion by heating of said granules to the viscous liquid state, then
(iii) the passing of the corresponding streams through an extrusion head comprising a set of coplanar and concentric annular dies, each brought to a temperature below 260°C, so as to form a tubular bubble comprising several layers, in which the order of the layers corresponds to that desired for the final film, then
(iv) the radial (relative to the plane of the annular dies) expansion and the drawing (in the direction perpendicular to said plane) of the bubble, then
(v) the cooling of said bubble.

11. Use of the multilayer film as defined in one of Claims 1 to 8, for producing reclosable packagings.
